# EUROPEAN PATENT APPLICATION

(11) **EP 2 704 433 A2**
(43) Date of publication of application: **05.03.2014**
(21) Application number: 12777485.9
(22) Date of filing: 30.04.2012
(51) Int. Cl.: H04N 7/24, H04W 28/02

(54) **METHOD AND APPARATUS FOR ADJUSTING A DATA TRANSMISSION RATE IN A WIRELESS COMMUNICATION SYSTEM**

(30) Priority: 28.04.2011 US 201161479979 P
(71) Applicant: Samsung Electronics Co., Ltd., Suwon-si, Gyeonggi-do 443-742 (KR)
(72) Inventor: PARK, Sung-bum, Seongnam-si Gyeonggi-do 463-914 (KR); SHAO, Huai-rong, San Jose, California 95136 (KR); KWON, Hyuk-choon, Seoul 133-779 (KR)
(74) Representative: Bray, Richard Anthony
(86) International application number: PCT/KR2012/003351
(87) International publication number: WO 2012/148238

(57) **Abstract**

A method and apparatus for transmitting image data via a wireless channel, the method and apparatus involving dropping one or more pixels from every pixel block consisting of the image data, so as to decrease a data rate of the image data, and transmitting the image data from which the one or more pixels are dropped. A method and apparatus for restoring image data via a wireless channel, the method and apparatus involving receiving the image data from which data values of one or more pixels are dropped, and restoring the one or more dropped pixels by referring to the data values of the one or more pixels.

## Description

### TECHNICAL FIELD

The present invention relates to wireless communication, and more particularly, to communication for transmission of image data.

### BACKGROUND ART

Due to an increase in resolution of images, the number of electronic devices that are capable of displaying high-definition (HD) images has increased. Most conventional devices compress an HD image having a bandwidth of several Gbps into small images so as to perform data transmission between devices. However, when an image is compressed or restored, a portion of image information may be lost or quality of the image may deteriorate.

In a wireless communication system, connection setting and channel bandwidth allocation are performed before an image stream is transmitted. Here, the image stream may be transmitted after a sufficient channel bandwidth is allocated, and control with respect to stream configuration is completed. However, due to another transmission that is ongoing in the same channel, sufficient channel bandwidth may not be ensured. Also, quality of a wireless channel is dynamically changed according to time. In particular, in a 60 GHz band wireless channel in which beamformed transmission is performed, a channel may be even affected by a person's motion.

### DETAILED DESCRIPTION OF THE INVENTION

### TECHNICAL PROBLEM

The present invention provides a wireless communication system in which uncompressed image data is transmitted at an adjusted data transmission rate (data rate) and pixels included in received image data are restored.

### TECHNICAL SOLUTION

According to an aspect of the present invention, there is provided a method of transmitting image data via a wireless channel, the method including operations of dropping one or more pixels from every pixel block consisting of the image data, so as to decrease a data rate of the image data; and transmitting the image data from which the one or more pixels are dropped.

According to another aspect of the present invention, there is provided a method of restoring image data via a wireless channel, the method including operations of receiving the image data from which data values of one or more pixels are dropped; and restoring the one or more dropped pixels by referring to the data values of the one or more pixels. According to another aspect of the present invention, there is provided a computer-readable recording medium having recorded thereon a program for executing the above methods, by using a computer.

### ADVANTAGEOUS EFFECTS

According to the one or more embodiments of the present invention, when image data is transmitted via the wireless channel, the data rate may be progressively adjusted according to an available bandwidth.

### DESCRIPTION OF THE DRAWINGS

The above and other features and advantages of the present invention will become more apparent by describing in detail exemplary embodiments thereof with reference to the attached drawings in which reference numerals mean structural elements.
FIG. 1 is a block diagram of a wireless communication system for transmitting image data from a wireless transmitter to a wireless receiver via a wireless channel according to an embodiment of the present invention.
FIG. 2 illustrates an example of adjusting a data rate and transmitting image data in a wireless communication system including a wireless channel, according to an embodiment of the present invention.
FIG. 3 illustrates a two-dimensional (2D) uncompressed image frame of a plurality of pixels, according to an embodiment of the present invention.
FIGS. 4 through 16 illustrate examples in which a data rate is adjusted by progressively dropping one or more pixels from every pixel block of image data, according to embodiments of the present invention.
FIG. 17 is a flowchart of a method of progressively adjusting a data rate, performed by a wireless transmitter when the wireless transmitter transmits image data, according to an embodiment of the present invention.
FIG. 18 is a flowchart of a method of receiving image data with an adjusted data rate and restoring the image data, performed by a wireless receiver, according to an embodiment of the present invention.

### BEST MODE FOR CARRYING OUT THE INVENTION

According to an aspect of the present invention, there is provided a method of transmitting image data via a wireless channel, the method including operations of dropping one or more pixels from every pixel block consisting of the image data, so as to decrease a data rate of the image data; and transmitting the image data from which the one or more pixels are dropped.

The pixel block may include one or more pixels that are spatially adjacent to each other, and the operation of dropping the one or more pixels may include an operation of dropping the one or more pixels based on information about a size of the pixel block which is obtained by using a BlockMode field of the image data.

The operation of dropping the one or more pixels may further include an operation of progressively dropping pixels so as to additionally decrease the data rate, based on a bandwidth of the wireless channel via which the image data is transmitted.

The operation of progressively dropping may include an operation of progressively changing at least one of the size of the pixel block and the number of pixels to be dropped, and then dropping the pixels.

The operation of dropping the pixels may include an operation of first dropping a pixel having the greatest reference distance from an initial pixel included in the pixel block.

The operation of dropping the pixels may include an operation of dropping pixels selected at positions that are uniformly disposed in the pixel block.

The operation of transmitting may include operations of hierarchically classifying a plurality of pixel dropping modes according to positions and the number of pixels to be dropped; and transmitting the image data along with indexing information indicating a pixel dropping mode that corresponds to the positions and the number of the one or more pixels and that is from among the plurality of pixel dropping modes.

According to another aspect of the present invention, there is provided a method of restoring image data via a wireless channel, the method including operations of receiving the image data from which data values of one or more pixels are dropped; and restoring the one or more dropped pixels by referring to the data values of the one or more pixels.

The operation of restoring the one or more dropped pixels may include an operation of performing the restoring by referring to a pixel having the smallest reference distance from a restoring-target pixel in a pixel block including the restoring-target pixel.

The operation of receiving the image data may include an operation of receiving the image data along with indexing information about positions and the number of dropped pixels.

The operation of restoring the one or more dropped pixels may include an operation of performing the restoring by referring to the indexing information.

According to another aspect of the present invention, there is provided a wireless transmitter for transmitting image data via a wireless channel, the wireless transmitter including a pixel drop module for dropping one or more pixels from every pixel block consisting of the image data, so as to decrease a data rate of the image data; and a data transmitting module for transmitting the image data from which the one or more pixels are dropped.

According to another aspect of the present invention, there is provided a wireless receiver for restoring image data via a wireless channel, the wireless receiver including a data receiving module for receiving the image data from which data values of one or more pixels are dropped; and a pixel restoring module for restoring the one or more dropped pixels by referring to the data values of the one or more pixels.

According to another aspect of the present invention, there is provided a computer-readable recording medium having recorded thereon a program for executing the above methods, by using a computer.

### MODE FOR CARRYING OUT THE INVENTION

All terms including descriptive or technical terms which are used herein should be construed as having meanings that are obvious to one of ordinary skill in the art. However, the terms may have different meanings according to an intention of one of ordinary skill in the art, precedent cases, or the appearance of new technologies. Also, some terms may be arbitrarily selected by the applicant, and in this case, the meaning of the selected terms will be described in detail in the detailed description of the invention. Thus, the terms used herein have to be defined based on the meaning of the terms together with the description throughout the specification.

Also, when a part "includes" or "comprises" an element, unless there is a particular description contrary thereto, the part can further include other elements, not excluding the other elements. In the following description, terms such as "unit" and "module" indicate a unit for processing at least one function or operation, wherein the unit and the block may be embodied as hardware or software or embodied by combining hardware and software.

Hereinafter, transmitted and received image data includes a plurality of pixels that correspond to image information. According to Wireless Gigabit Alliance (WiGig) standards, uncompressed image data whose data rate is dynamically adjusted based on an available bandwidth of a wireless channel is called 'WiGig Spatial Processing (WSP) format'. Information indicating whether uncompressed image data is the WSP format may be included in a FeatureList field of a transmitted packet. The WSP format may be applied to both two-dimensional (2D) image data and three-dimensional (3D) image data.

Hereinafter, the present invention will be described in detail by explaining exemplary embodiments of the invention with reference to the attached drawings.

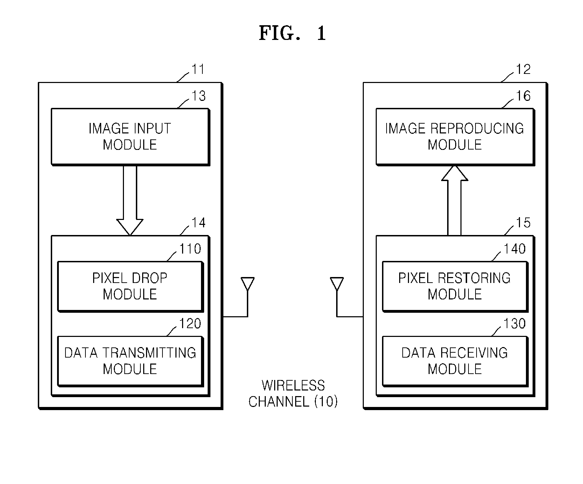

FIG. 1 is a block diagram of a wireless communication system for transmitting image data from a wireless transmitter 11 to a wireless receiver 12 via a wireless channel 10 according to an embodiment of the present invention. The transmitted image data may be a WSP format.

An image input module 13 in the wireless transmitter 11 may provide information including uncompressed image data to a transmitting unit 14 via various types of wired or wireless interfaces. For example, the image input module 13 may be an image decoder or an uncompressed high-definition (HD) image recording unit.

The transmitting unit 14 may use a millimeter wave (mmWave) wireless technology so as to transmit the image data to a receiving unit 15 in the wireless receiver 12. Other wireless technology such as an ultra wide band (UWB) or 802.11 n may be used for an image format such as 480p.

The receiving unit 15 of the wireless receiver 12 may provide the received information to an image reproducing module 16 via another wired or wireless module. The image reproducing module 16 may be an HDTV, a monitor, a projector, or the like.

In order to generate image data whose data rate is adjusted, the wireless transmitter 11 may drop information of pixels that are selected from among data values of a plurality of pixels included in the image data. When the data rate of the image data to be transmitted is not sufficiently lower than an environment or a bandwidth of the wireless channel 10, a pixel drop module 110 included in the transmitting unit 14 may decrease the data rate by progressively performing pixel dropping processes.

The wireless transmitter 11 may further include a data transmitting module 120 for transmitting the image data whose data rate is adjusted to the wireless receiver 12 via the wireless channel 10.

In order to correspond to the wireless transmitter 11, the receiving unit 15 included in the wireless receiver 12 may include a data receiving module 130 for wireless communication, and a pixel restoring module 140 for regressively performing operations of the pixel drop module 110 so as to restore the image data before its data rate is adjusted.

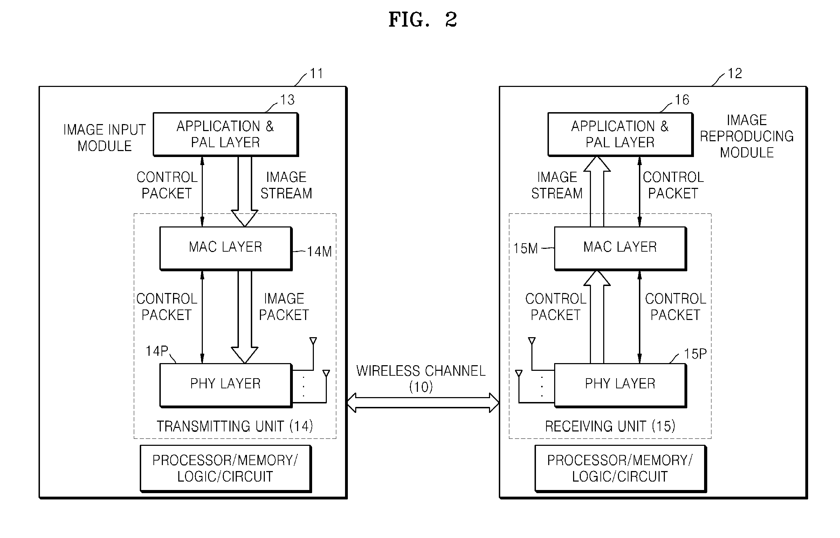

FIG. 2 illustrates an example of adjusting a data rate and transmitting image data in a wireless communication system including a wireless channel 10, according to an embodiment of the present invention.

An image input module 13 of a wireless transmitter 11 may include an application & protocol adaptation layer (PAL) layer that continuously streams an image stream to a media access control (MAC) layer 14M in a transmitting unit 14. The MAC layer 14M may packetize the image stream into MAC packets and may transmit the MAC packets to a physical (PHY) layer 14P so as to transmit the image stream to a wireless receiver 12 via the wireless channel 10.

In the wireless receiver 12, a PHY layer 15P in a receiving unit 15 may receive the MAC packets and may provide the MAC packets to a MAC layer 15M. The MAC layer 15M may depacketize the MAC packets and may provide image information to an image reproducing module 16. The image reproducing module 16 may include an application & PAL layer.

According to the present embodiment, the MAC layer 14M of the wireless transmitter 11 generates image packets from the image stream that is provided by the image input module 13, based on a size and a shape of a pixel block for pixel partitioning. The pixel block denoted as NxM may indicate a group of adjacent image pixels having N pixel rows and M pixel columns. When the image packets are generated, the pixels in the pixel block may be separated and then may be positioned in different pixel partitions, respectively.

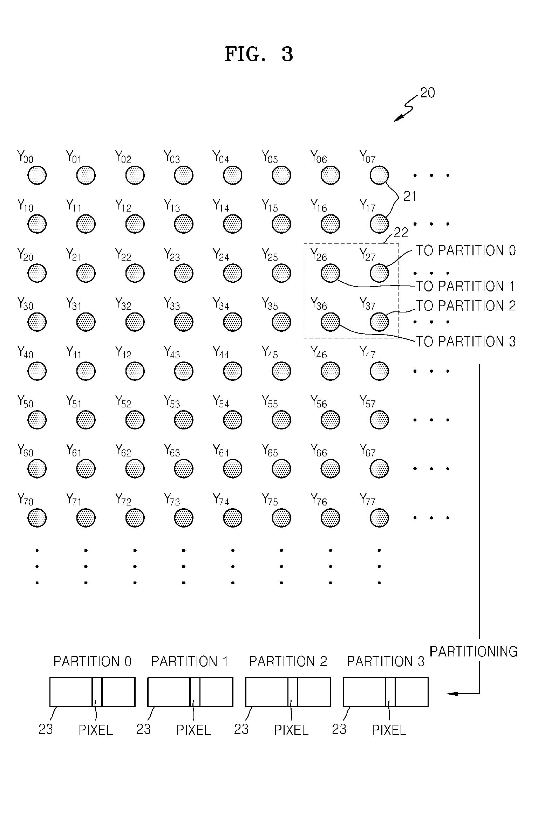

FIG. 3 illustrates a 2D uncompressed image frame 20 of a plurality of pixels 21, according to an embodiment of the present invention. The plurality of pixels 21 are expressed by using a symbol 'O' Locations of the plurality of pixels 21 may be indicated as Yij(i, j=0, 1, 2, ···), respectively, according to rows and columns at which the plurality of pixels 21 are disposed.

In the present embodiment, a pixel block 22 that is 2x2 is used to map the plurality of pixels 21 to four pixel partitions 23 (that is, a partition 0, a partition 2, a partition 2, and a partition 3). The pixel partitions 23 are inserted into packets in the MAC layer 14M of the transmitting unit 14, and the packets pass through the PHY layer 14P and then are transmitted to the wireless receiver 12 via the wireless channel 10. The packets that are received by the PHY layer 15P of the receiving unit 15 may be depacketized in the MAC layer 15M.

A size of the pixel block 22 may be determined according to a capacity of a memory buffer of the wireless receiver 12, a format of image data, and a type of content. For example, if image data of 8 rows may be buffered due to a limit of a buffer capacity in a chip, a maximum pixel block size may be 8xM (M=1, 2, 3, ···). Also, the type of content, and a resolution and a format of an image may also affect the size of the pixel block 22. According to the present embodiment, information about the size of the pixel block 22 may be stored in a BlockMode field in the image data that is transmitted via the wireless channel 10.

In general, pixels in the same pixel block have similar values. In an HD image of 1920x1080, pixels in an 8x8 pixel block generally have highly similar values. However, in an image having a low resolution of 800x600, pixels in a 4x4 pixel block generally have similar values, and an 8x8 pixel block may be too large to be a pixel block size. The pixels in the same pixel block may be spatially related to each other.

According to the present embodiment, if a bandwidth that is actually applied to the wireless channel 10 may accept a rate that is requested for an image stream transmitted from the image input module 13, data values of all pixels in the pixel block 22 are transmitted. However, if the bandwidth of the wireless channel 10 may not accept the requested data rate, progressive rate adaptation is performed to decrease the data rate.

In the present embodiment, the progressive rate adaptation may include a progressive pixel dropping (PPDR) procedure. According to the present embodiment, a progressive pixel differential transformation (PPDT) procedure may be performed, in addition to the PPDR procedure.

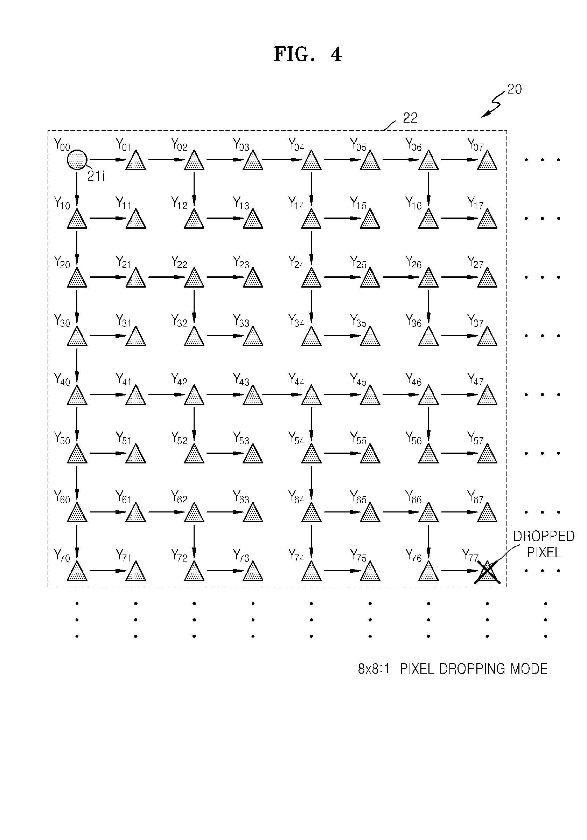

Hereinafter, with reference to FIGS. 4 through 16, a detailed description will be provided with respect to a process of adjusting a data rate of image data by using the PPDR procedure.

In FIGS. 4 through 16, a circular symbol 'O' indicates an original value of a pixel on which differential transformation is not performed, and a triangular symbol 'Δ' indicates a resultant value of a pixel after the PPDT procedure is performed thereon. That is, in FIG. 4, a Y00 pixel indicates a pixel on which differential transformation is not performed, and the rest of pixels formed as a triangular symbol indicate resultant values obtained by encoding differences between values of pixels that are adjacent to each other in an arrow direction. That is, a Y01 pixel indicates a resultant value obtained by encoding a difference value with respect to the Y00 pixel, and a Y02 pixel indicates a resultant value obtained by encoding a difference value with respect to the Y01 pixel. That is, the Y00 pixel may indicate a pixel whose original pixel value is completely transmitted without a separate transformation procedure, and the rest of pixels except for an initial pixel in a pixel block 22 may indicate pixels whose difference values with respect to previous reference values are transmitted as pixel values in the arrow direction from the Y00 pixel, wherein the difference values are obtained via the PPDT procedure.

By performing the PPDT procedure, it is possible to transmit only a difference value with respect to an adjacent value, instead of transmitting an original value of each pixel, so that a data rate required to transmit image data may be decreased.

The PPDT procedure may be performed before the PPDR procedure is performed, and only the PPDR procedure may be performed without the PPDT procedure. In a former case, pixel values to be dropped are not original pixel values but are difference values with respect to adjacent values. However, in a latter case, the original pixel values are dropped.

According to the present embodiment, in order to decrease a data rate and to maintain stability and acceptability of image quality with respect to uncompressed image data, a wireless transmitter may progressively drop one or more pixel partitions. In order to keep the image quality acceptable and to facilitate pixel restoration and error correction in a receiving terminal, the wireless transmitter may uniformly select dropping-target pixels in each image data (or each image frame).

Referring to FIG. 4, a pixel dropping procedure according to the present embodiment may be defined by a pixel dropping mode. Each pixel dropping mode may be expressed as NxM:k (where, N, M=1, 2, 3, ···, k=1, 2, 3, ···) that means k pixels are to be dropped from the pixel block 22 having a size of NxM consisting of N rows and M columns in an image frame 20.

In each pixel dropping mode, a dropping-target pixel may be selected based on a reference distance from an initial pixel that is a first pixel in the pixel block 22. The initial pixel that is the first pixel in the pixel block 22 may correspond to the Y00 pixel whose row and column order in the pixel block is the first. That is, the initial pixel may indicate a pixel whose original pixel value is completely transmitted without a separate transformation procedure, and the rest of pixels except for the initial pixel in the pixel block 22 may indicate pixels whose difference values with respect to previous reference values from the initial pixel are transmitted as pixel values, wherein the difference values are obtained via the PPDT procedure.

The reference distance may indicate a spatially-adjacent distance between a selected pixel and the initial pixel in the pixel block 22. That is, according to positions of rows and columns in the pixel block 22, each of pixels that are expressed as Yij (i=0, 1, 2, ···, N-1)(j=0, 1, 2, ···, M-1) has the reference distance of i+j from the Y00 pixel that is the initial pixel. In another embodiment, the reference distance may correspond to the number of arrows that connect a selected pixel and an initial pixel.

For example, a Y03 pixel of FIG. 4 has the reference distance of 0+3=3 from the Y00 pixel that is the initial pixel, and an Y77 pixel that is at the most lower right position has the reference distance of 7+7=14. The reference distance may be used in determination of an order of dropping-target pixels in the pixel block 22.

Referring to the embodiment of FIG. 4, the Y77 pixel having the greatest reference distance from the Y00 pixel that is the initial pixel is first dropped. By dropping target pixels in this manner, an affect to other pixels which is related to the image quality at the receiving terminal is decreased.

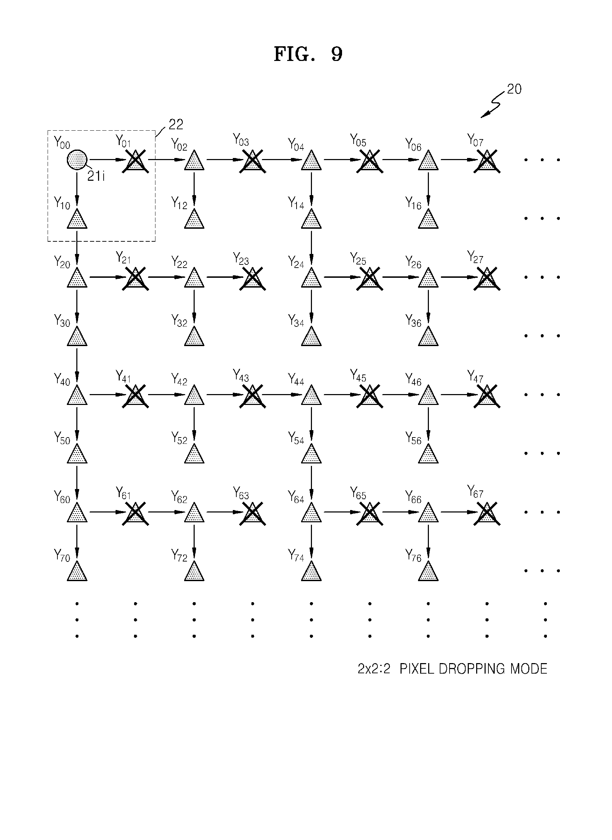

According to the present embodiment, when two pixels have the greatest reference distance from the initial pixel in the pixel block 22, a pixel in a row direction may be first dropped. This will be described later with reference to FIG. 9.

FIG. 4 illustrates an 8x8:1 pixel dropping mode, according to an embodiment of the present invention, and here, a size of the pixel block 22 is 8x8, and the number of dropping-target pixels is k=1. Thus, in the 8x8:1 pixel dropping mode, Y(8i+7)(8j+7) pixels from among a plurality of pixels are dropped. That is, according to the present embodiment, N=8, M=8, k=1, and the Y(8i+7)(8j+7) pixels in each 8x8 pixel block are dropped. That is, one pixel is dropped from every pixel block including 64 pixels.

When a data rate is sufficiently decreased via the pixel dropping procedure, compared to a bandwidth, image data excluding the dropped pixels may be packetized and may be transmitted to a wireless receiver via a wireless channel.

Hereinafter, a method of restoring the image data received according to the 8x8:1 pixel dropping mode will be described in detail. The wireless receiver may receive the packetized image data and then may depacketize the packetized image data. Afterward, the wireless receiver may obtain pixel dropping mode information and thus may restore the dropped pixels. The pixel dropping mode information about the dropped pixels may indicate index information about a pixel dropping mode in the form of NxM:k, or may indicate information about a size of a pixel block and the number of the dropped pixels.

When the wireless receiver receives the image data in which one pixel is dropped from every 64 pixels according to the 8x8:1 pixel dropping mode, a pixel restoring module restores a restoring-target pixel by referring to a data value of a pixel having the smallest reference distance from the restoring-target pixel. That is, when the Y77 pixel is dropped from the pixel block 22, a pixel value of the Y77 pixel may be restored with reference to a data value of an Y76 pixel.

When two pixels have the same reference distance from the initial pixel in the pixel block 22, the restoring-target pixel may be restored with reference to a data value of a pixel that is adjacent to the restoring-target pixel in a row direction. That is, although two pixels of Y76 and Y67 are spatially adjacent to the Y77 pixel, the Y77 pixel may be restored with reference to the Y76 pixel that is adjacent to the Y77 pixel in a row direction.

The aforementioned pixel restoring order is shown by using arrows in FIGS. 4 through 16, and each arrow may indicate a reference pixel to be referred to when each dropped pixel is restored. For example, Y76 → Y77 may mean that the Y77 pixel is restored with reference to the Y76 pixel.

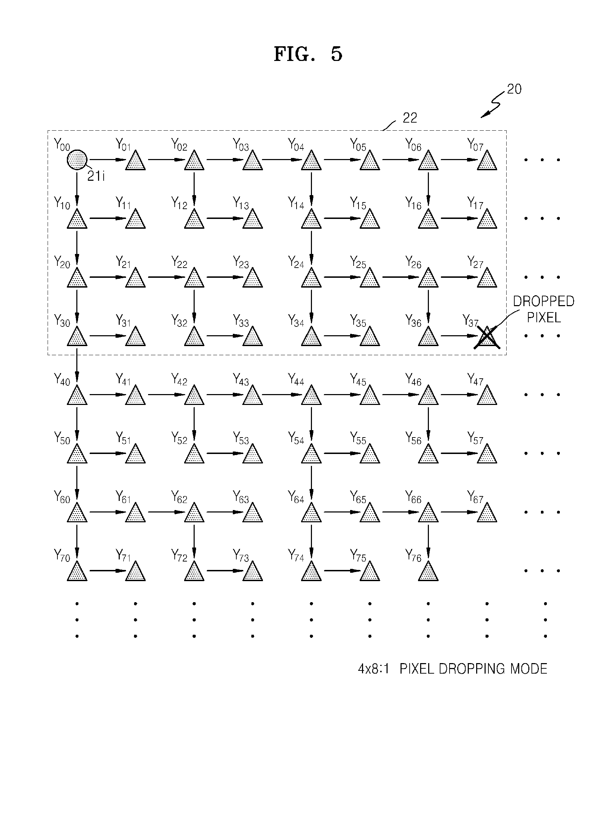

FIG. 5 illustrates a 4x8:1 pixel dropping mode, according to another embodiment of the present invention. Here, a dropping procedure and a restoring procedure will be described in detail. A pixel block 22 consists of 4 rows and 8 columns, and one pixel is dropped at every pixel block 22 so that two pixels are dropped from 8x8 pixels.

In the 4x8:1 pixel dropping mode, Y(4i+3)(8j+7) pixels are dropped. That is, Y37 and Y77 pixels from among pixels of FIG. 5 are dropped. In the upper pixel block 22, the Y37 pixel having the greatest reference distance from a Y00 pixel that is an initial pixel is dropped. Although not illustrated in FIG. 5, a Y77 pixel having the greatest reference distance from a Y40 pixel that is an initial pixel is dropped from a lower pixel block.

The pixel dropping procedure according to the 4x8:1 pixel dropping mode may be sequentially performed after an output of the 8x8:1 pixel dropping mode shown in FIG. 4. That is, when a data rate according to the 8x8:1 pixel dropping mode is not sufficiently low, compared to a bandwidth, the data rate may be additionally decreased according to the 4x8:1 pixel dropping mode thereafter.

In other words, as a result of dropping the pixels according to the pixel dropping mode, if the bandwidth is still insufficient, the wireless transmitter may change the pixel dropping mode. That is, a PPDR procedure may be performed in a manner that a first pixel dropping mode of N1xM1:k1 is changed to a second pixel dropping mode of

N2xM2:k2.

According to the present embodiment, the number of dropping-target pixels in image data may be increased by using a value that satisfies N1>N2, M1 >M2, k1 <k2. In another embodiment, a second pixel dropping mode may be selected by fixing one of row (N) and column (M) and changing the other one. As will be described later, the PPDR procedure may be performed in such a manner that a 2x2:3 pixel dropping mode is changed to a 4x4:13 pixel dropping mode. That is, when the PPDR procedure is performed, a method of changing the pixel dropping mode is not limited to the aforementioned examples, and pixel dropping modes may be progressively changed by using various methods.

Hereinafter, a process of restoring data whose data rate is adjusted according to the 4x8:1 pixel dropping mode will be described. The Y37 pixel may be restored with reference to a Y36 pixel from among the Y36 pixel and a Y27 pixel that have the smallest reference distance from the Y37 pixel, wherein the Y36 pixel is adjacent to the Y37 pixel in a row direction. Similarly, a Y77 pixel may be restored with reference to a Y76 pixel.

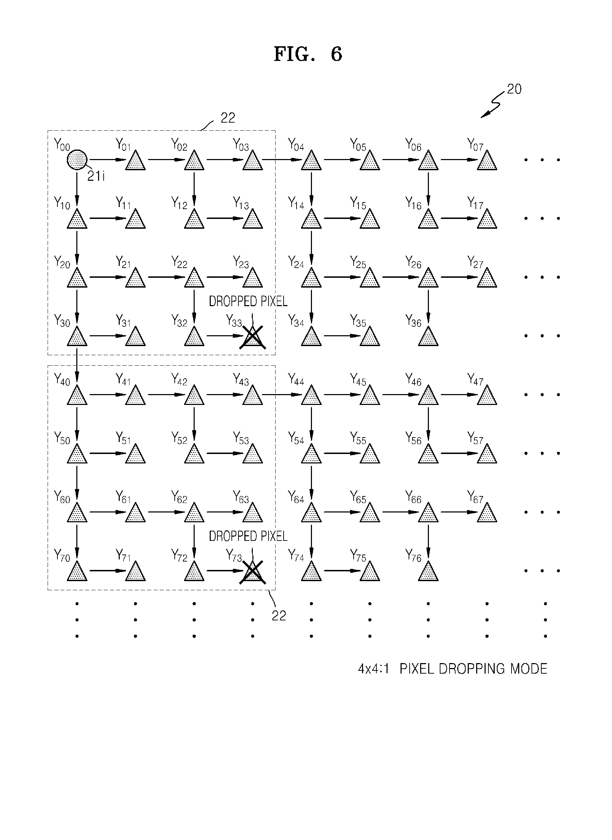

According to a 4x4:1 pixel dropping mode of FIG. 6, Y(4i+3)(4j+3) pixels are dropped at every pixel block 22 in a dropping procedure. As described above, when the data rate according to the 4x8:1 pixel dropping mode is not sufficiently decreased, the 4x4:1 pixel dropping mode may be sequentially performed. In a restoring procedure, image data may be restored in a manner that a Y33 pixel refers to a Y32 pixel, and a Y73 pixel refers to a Y72 pixel. The Y37 pixel and the Y77 pixel are the same as described above with reference to FIG. 5.

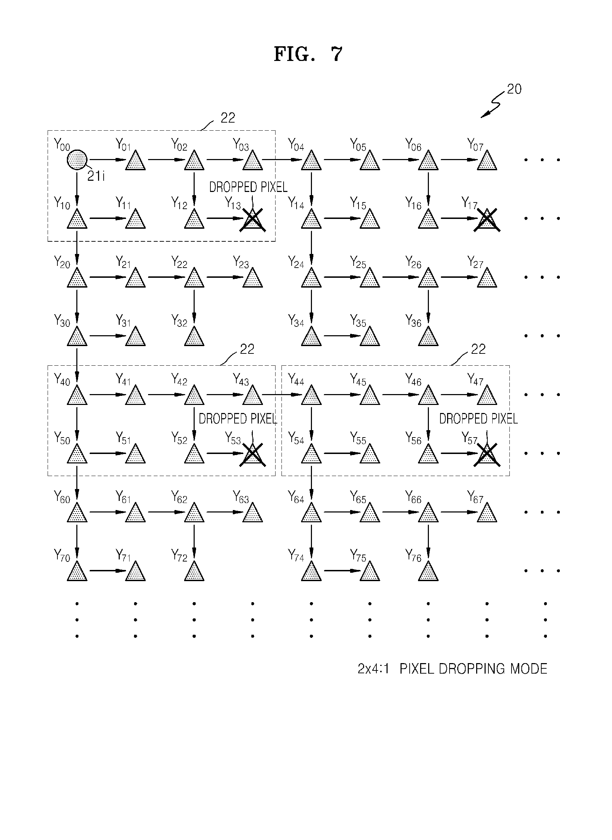

According to a 2x4:1 pixel dropping mode of FIG. 7, Y(2i+1)(4j+3) pixels are dropped at every pixel block 22 (i.e., 8 pixels are dropped from an 8x8 pixel block). For example, pixels of Y13, Y17, Y33, Y37, and the like are dropped.

Afterward, in a restoring procedure, Y(2i+1)(4j+2) pixels having the smallest reference distance from the dropped pixels are referred to, respectively. That is, the Y13, Y17, Y33, and Y37 pixels may be restored with reference to Y12, Y16, Y32, and Y36 pixels, respectively.

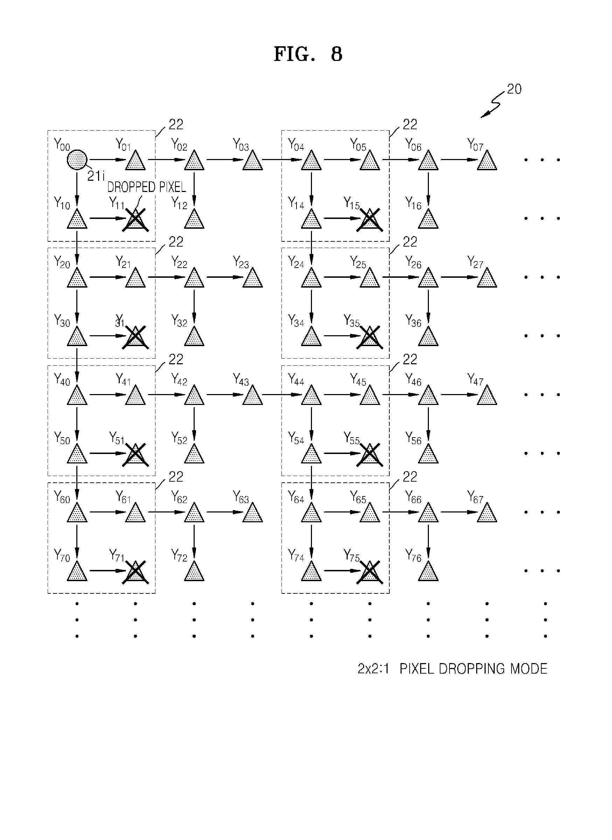

According to a 2x2:1 pixel dropping mode of FIG. 8, Y(2i+1)(2j+1) pixels are dropped. In a restoring procedure, the restoring procedure may be performed by referring to each of Y(2i+1)(2j) pixels. Referring to the present embodiment of FIG. 8, a Y31 pixel that is a dropped pixel may be restored with reference to a Y30 pixel, and Y71, Y17, and Y57 pixels may be restored with reference to Y70, Y16, and Y56 pixels, respectively.

FIG. 9 illustrates a 2x2:2 pixel dropping mode, according to another embodiment of the present invention, and in the present embodiment, a half of a plurality of pixels is dropped. As described above, the 2x2:2 pixel dropping mode may be performed, in addition to the 2x2:1 pixel dropping mode of FIG. 8.

In a pixel dropping procedure, Y(2i)(2j+1) and Y(2i+1)(2j+1) pixels are dropped. For example, pixels of Y10, Y12, Y34, Y36, or the like are dropped. In this regard, Y(2i)(2j+1) pixels and Y(2i+1)(2j) pixels have the greatest reference distance (i.e., a reference distance of 2 from an initial pixel) from the initial pixel included in a pixel block 22, and the Y(2i)(2j+1) pixels that are adjacent to the initial pixel in a row direction are dropped. That is, Y01 and Y10 pixels have the smallest reference distance from a Y00 pixel, and in this regard, the Y01 pixel having the smallest reference distance in the row direction may be first dropped.

In a pixel restoring procedure, the Y(2i)(2j+1) pixels are restored with reference to Y(2i)(2j) pixels, respectively and, the Y(2i+1)(2j+1) pixels are restored with reference to the Y(2i+1)(2j) pixels, as described above with reference to FIG. 8. For example, Y03, Y47, and Y63 pixels may be restored with reference to Y02, Y46, and Y62 pixels, respectively.

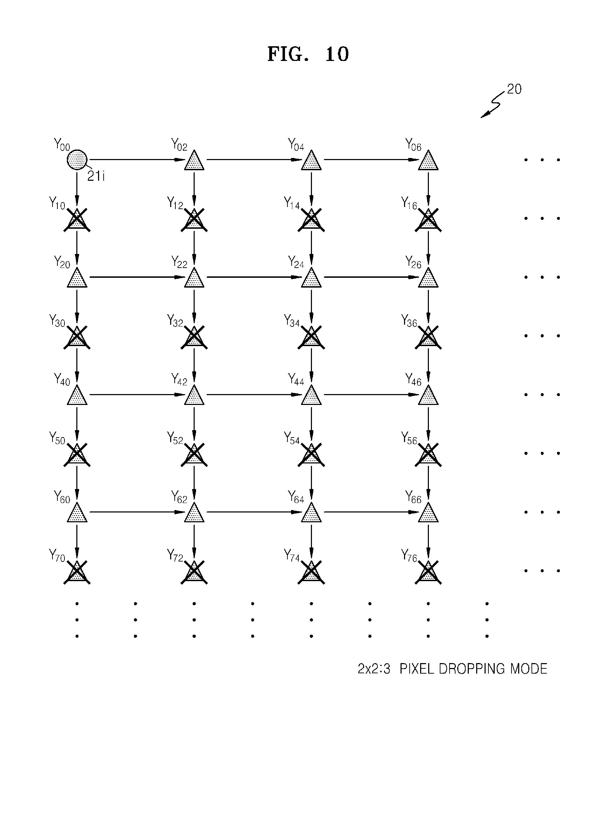

FIG. 10 illustrates a 2x2:3 pixel dropping mode, according to another embodiment of the present invention, and in the present embodiment, Y(2i+1)(2j) pixels are dropped in addition to the pixels that are dropped in the 2x2:2 pixel dropping mode of FIG. 9. When the pixels that are dropped in the 2x2:3 pixel dropping mode are restored, all of the Y(2i)(2j+1), Y(2i+1)(2j+1), and Y(2i+1)(2j) pixels are restored with reference to a Y(2i)(2j) pixel. That is, only the Y(2i)(2j) pixel that corresponds to an initial pixel from among four pixels included in a pixel block having a 2x2 size is not dropped, so that three dropped pixels are restored with reference to the Y(2i)(2j) pixel that is the initial pixel.

For example, Y23, Y32, and Y33 pixels are all dropped, and in a restoring procedure, the Y23, Y32, and Y33 pixels may be restored with reference to a Y22 pixel that is not dropped from the pixel block.

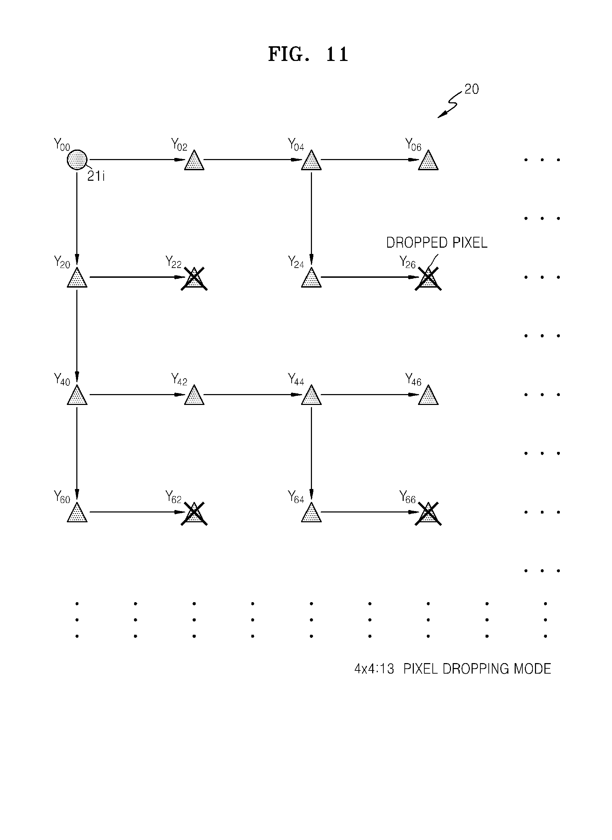

A 4x4:13 pixel dropping mode shown in FIG. 11 may be an extended embodiment of the 2x2:1 pixel dropping mode of FIG. 8. In addition to the pixels dropped in the 2x2:3 pixel dropping mode of FIG. 10, Y(4i+2)(4j+2) pixels are dropped. In a restoring procedure, the Y(4i+2)(4j+2) pixels are restored with reference to Y(4i+2)(4j) pixels, and the rest of the dropped pixels are restored via the same restoring procedure of the 2x2:3 pixel dropping mode of FIG. 10. That is, each of Y(2i)(2j+1), Y(2i+1)(2j+1), and Y(2i+1)(2j) pixels is restored with reference to Y(2i)(2j) pixels. However, because the Y(4i+2)(4j+2) pixels are restored with reference to the Y(4i+2)(4j) pixels, as a result, all of Y(4i+2)(4j+3), Y(4i+3)(4j+3), and Y(4j+3)(4j+2) pixels are restored with reference to the Y(4i+2)(4j) pixels.

Referring to FIG. 11, because a Y26 pixel is dropped, Y27, Y36, and Y37 pixels cannot be restored with reference to a Y26 pixel. Thus, the Y27, Y36, and Y37 pixels may be restored with reference to a Y24 pixel that has the smallest reference distance and that is from among non-dropped pixels. That is, not only Y25, Y34, and Y35 pixels but also the Y26, Y27, Y36, and Y37 pixels may be restored with reference to the Y24 pixel.

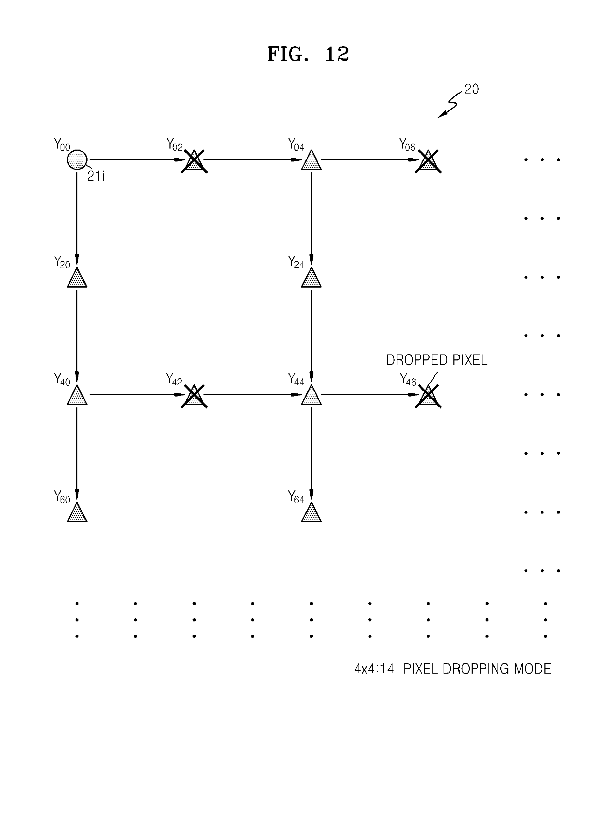

In a 4x4:14 pixel dropping mode of FIG. 12, similar to the embodiment of FIG. 9, Y(4i)(4j+2) pixels are dropped. That is, two pixels of Y(4i)(4j+2) and Y(4i+2)(4j) have the greatest reference distance from an initial pixel, and in this regard, the Y(4i)(4j+2) pixel that is adjacent to the initial pixel in a row direction is first dropped. The dropped Y(4i)(4j+2) pixels are restored with reference to Y(4i)(4j) pixels, respectively, and a restoring procedure of the rest of pixels is the same as described above with reference to FIGS. 10 and 11. However, because the Y(4i)(4j+2) pixels are restored with reference to the Y(4i)(4j) pixels in a similar manner as in the embodiment of FIG. 11, as a result, all of Y(4i+1)(4j+2), Y(4i+1)(4j+3), and Y(4i)(4j+3) pixels are restored with reference to the Y(4i)(4j) pixels.

For example, because a Y02 pixel is dropped, Y02, Y03, Y12, and Y13 pixels along with Y01, Y10, and Y11 pixels are restored with reference to a Y00 pixel. All of Y21, Y22, Y23, Y30, Y31, Y32, and Y33 pixels may be restored with reference to a Y20 pixel.

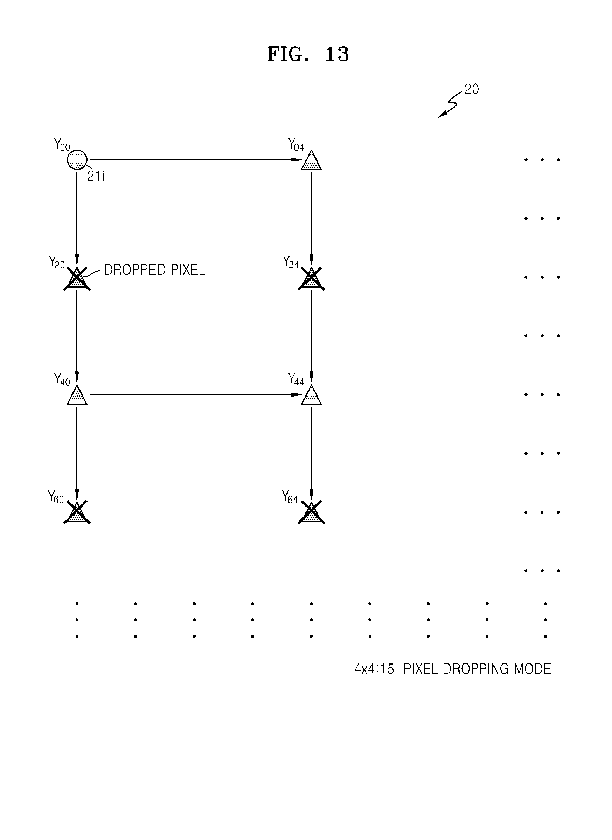

FIG. 13 illustrates a 4x4:15 pixel dropping mode, according to another embodiment of the present invention. In the 4x4:15 pixel dropping mode, Y(4i+2)(4j) pixels are dropped. In a restoring procedure, the Y(4i+2)(4j) pixels are restored with reference to a Y(4i)(4j) pixel that is an initial pixel, only the initial pixel is not dropped from a pixel block having a size of 4x4, and all of 15 pixels are restored with reference to the Y(4i)(4j) pixel that is the initial pixel. That is, 15 pixels except for a Y44 pixel from among 16 Yij(i, j=4, 5, 6, 7) pixels may be restored with reference to the Y44 pixel.

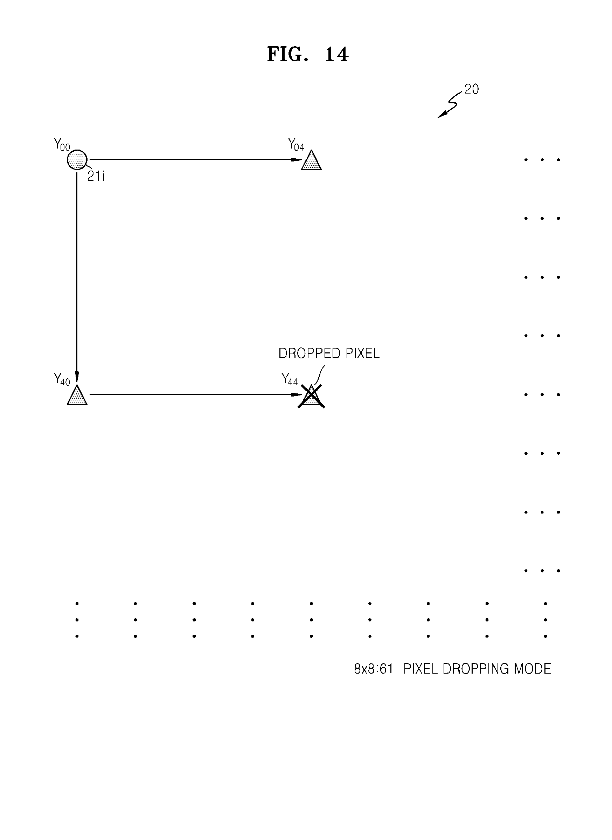

FIGS. 14 through 16 illustrate embodiments obtained by extending the size of 4x4 of the pixel block to a size of 8x8. In this regard, a pixel dropping procedure and a pixel restoring procedure may be performed according to the same manner as described above.

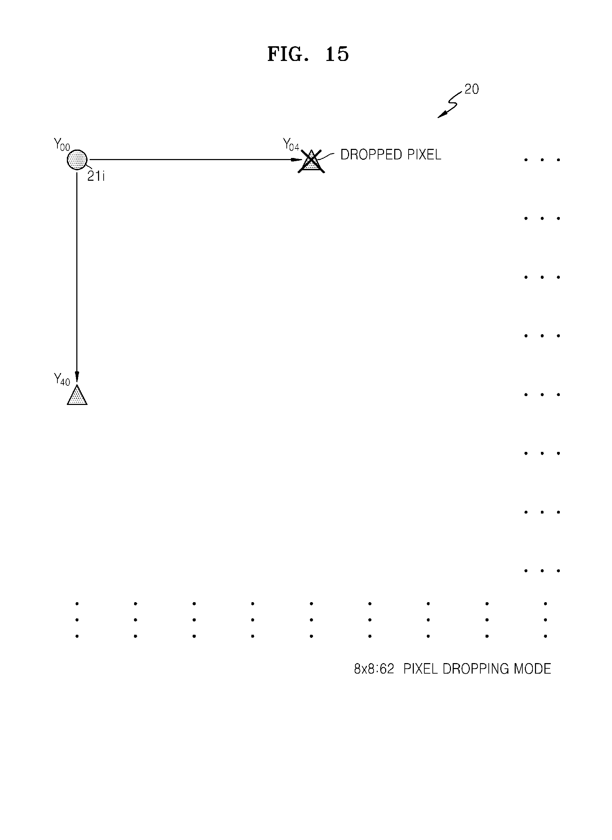

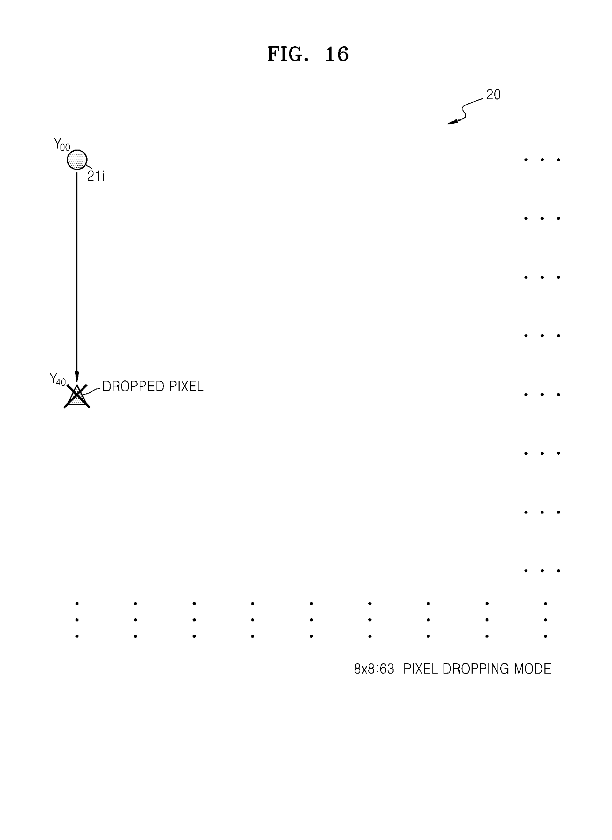

With reference to FIGS. 5 through 16, the various pixel dropping modes for decreasing a data rate according to the embodiments of the present invention are described. With respect to each of FIGS. 5 through 16, FIG. 5 illustrates the 4x8:1 pixel dropping mode (2 pixels from 8x8 are dropped), FIG. 6 illustrates the 4x4:1 pixel dropping mode (4 pixels from 8x8 are dropped), FIG. 7 illustrates the 2x4:1 pixel dropping mode (8 pixels from 8x8 are dropped), FIG. 8 illustrates the 2x2:1 pixel dropping mode (16 pixels from 8x8 are dropped), FIG. 9 illustrates the 2x2:2 pixel dropping mode (32 pixels from 8x8 are dropped), FIG. 10 illustrates the 2x2:3 pixel dropping mode (48 pixels from 8x8 are dropped), FIG. 11 illustrates the 4x4:13 pixel dropping mode (52 pixels from 8x8 are dropped), FIG. 12 illustrates the 4x4:14 pixel dropping mode (56 pixels from 8x8 are dropped), FIG. 13 illustrates the 4x4:15 pixel dropping mode (60 pixels from 8x8 are dropped), FIG. 14 illustrates the 8x8:61 pixel dropping mode (61 pixels from 8x8 are dropped), FIG. 15 illustrates the 8x8:62 pixel dropping mode (62 pixels from 8x8 are dropped), and FIG. 16 illustrates the 8x8:63 pixel dropping mode (63 pixels from 8x8 are dropped).

As described above, when a data rate is not sufficiently low, compared to a bandwidth, the PPDR procedure may be performed to decrease the data rate. That is, the PPDR procedure may be performed so that the number of pixels that are dropped from image data may be increased. For example, the 2x2:2 pixel dropping mode (32 pixels are dropped from 8x8) of FIG. 9 may be previously performed than the 4x4:15 pixel dropping mode (60 pixels are dropped from 8x8) of FIG. 13.

According to the one or more embodiments, the pixel dropping modes may be sequentially performed to decrease the data rate. That is, image data from which pixels whose numbers are determined by a pixel dropping mode are dropped may be input to allow a next pixel dropping mode to be performed. For example, image data in which 4 pixels in an 8x8 pixel block are dropped according to the 4x4:1 pixel dropping mode of FIG. 6 may be used as input data so as to allow 8 pixels in an 8x8 pixel block to be dropped according to the 2x4:1 pixel dropping mode of FIG. 7.

According to the one or more embodiments with reference to FIGS. 4 through 16, sizes of a pixel and the number of dropping-target pixels may be hierarchically classified. That is, as shown in Table 1 below, the pixel dropping modes may be classified based on the number of pixels to be dropped from the pixel block, and here, information about a pixel to be referred to when restoring the dropped pixels may also be classified.

**[Table 1]**

| Dropping Index | Pixel Block Mode | Dropped Pixel | Reference Pixel |
|---|---|---|---|
| 0 | 1x2 | Y01 | Y00 |
| 1 | 2x2 | Y11 | Y10 |
| 2 | | Y01 | Y00 |
| | | Y11 | Y10 |
| 3 | | Y01 | Y00 |
| | | Y10 | Y00 |
| | | Y11 | Y00 |
| 4 | 2x4 | Y03 | Y02 |
| 5 | 4x4 | Y33 | Y32 |
| 6 | | Y01 | Y00 |
| | | Y03 | Y02 |
| | | Y10 | Y00 |
| | | Y11 | Y00 |
| | | Y12 | Y02 |
| | | Y13 | Y02 |
| | | Y21 | Y20 |
| | | Y22 | Y20 |
| | | Y23 | Y20 |
| | | Y30 | Y20 |
| | | Y31 | Y20 |
| | | Y32 | Y20 |
| | | Y33 | Y20 |
| 7 | 4x8 | ··· | ··· |
| ··· | 8x8 | ··· | ··· |

As shown in Table 1 above, the information about a pixel to be referred to during restoration may be classified into a plurality of dropping modes according to a size of the pixel block, the number of dropped pixels, and positions of the dropped pixels. For example, in order to drop Y01 and Y11 pixels that are predicted with reference to Y00 and Y10 pixels, respectively, from a 2x2 pixel block, a wireless transmitter may transmit Dropping Index=2 as indexing information that indicates the Y01 and Y11 pixels that are dropped.

Based on the indexing information, a wireless receiver may recognize that the Y01 and Y11 pixels are dropped, and thus may restore them by referring to the Y00 and Y10 pixels, respectively.

Table 1 shown above is an example, and in this regard, 'Dropping Index' that is indexing information that indicates positions and numbers of pixels to be dropped from a pixel block may be variously set according to a combination of a size of the pixel block, a format of pixel differential transformation, a color format of image data, and other additional information.

According to another embodiment, when a PPDT procedure is performed before a PPDR procedure is performed, if a dropped pixel is used as a reference pixel for calculation of a difference value with respect to another pixel in pixel differential transformation, the difference value is recalculated during a dropping procedure. For example, when a Y10 pixel is dropped from the 2x2:2 pixel dropping mode (refer to FIG. 9), a value of a Y20 pixel is changed from 'Y20-Y10' to 'Y20-Y00', and with respect to the Y20 pixel, recalculation with respect to D=(Y10-Y00)+(Y20-Y10)=Y20-Y00 is performed, and D replaces data of the Y20 pixel. Adjustment of a data rate via the pixel dropping procedure may be performed in reverse order when a status of a wireless channel is improved or a higher data rate is possible.

In the pixel dropping procedure according to the present embodiment, pixels to be dropped from the pixel block 22 are selected based on two references. First, the pixels to be dropped are selected are those that are uniformly disposed in image data (or an image frame) so as to minimize deterioration of image quality. Second, a pixel having the greatest reference distance from an initial pixel in the pixel block 22 is selected to be first dropped.

In the pixel restoring procedure according to the one or more embodiments, various methods such as a 0-th order interpolation method, a bilinear interpolation method, a bicubic interpolation method, or the like may be used.

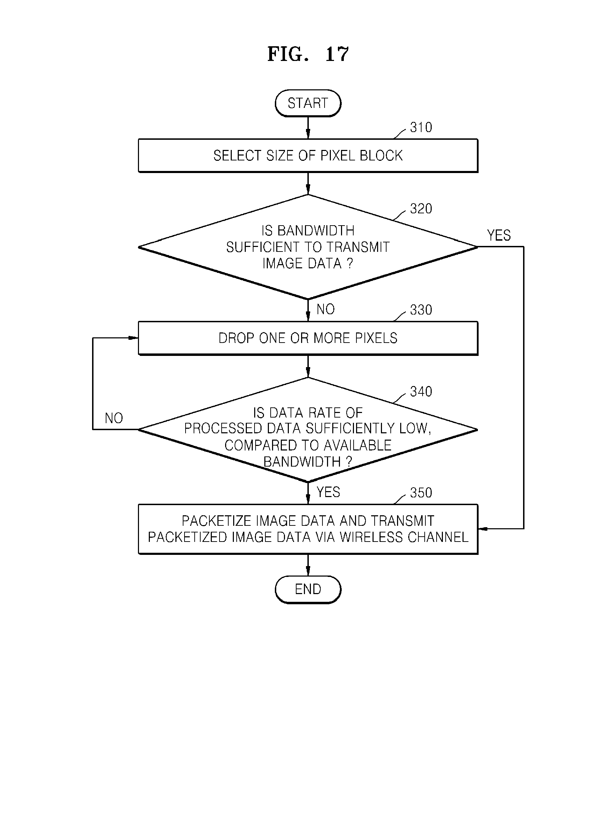

FIG. 17 is a flowchart of a method of progressively adjusting a data rate, performed by a wireless transmitter (refer to the wireless transmitter 11 of FIG. 1), according to an embodiment of the present invention. In the flowchart of FIG. 17, operations are performed in chronological order by the wireless transmitter 11, the image input module 13, the transmitting unit 14, the pixel drop module 110, and the data transmitting module 120 which are shown in FIGS. 1 and 2.

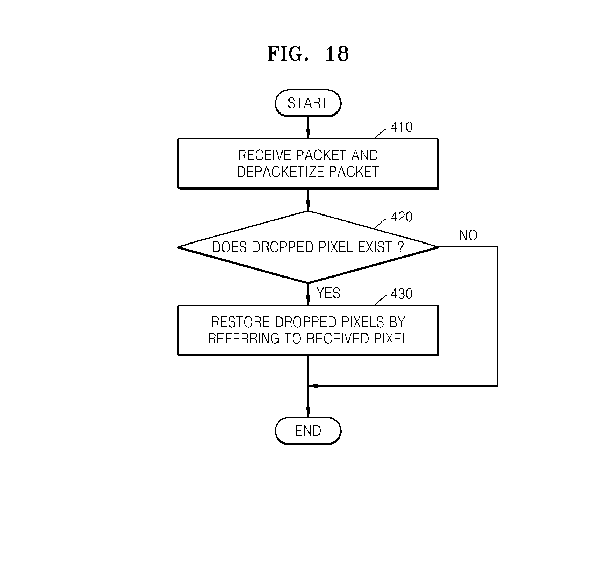

FIG. 18 is a flowchart of a method of restoring image data received by a wireless receiver (refer to the wireless receiver 12 of FIG. 1), according to an embodiment of the present invention. In the flowchart of FIG. 18, operations are performed in chronological order by the wireless receiver 12, the receiving unit 15, the data receiving module 130, the pixel restoring module 140, and the image reproducing module 16 which are shown in FIGS. 1 and 2. Thus, hereinafter, although descriptions are omitted, descriptions given above with reference to FIGS. 1 and 2 may also be applied to the flowcharts of FIGS. 17 and 18.

In operation 310 of FIG. 17, the wireless transmitter selects a pixel block with respect to image data. A size of the pixel block may be determined according to a capacity of a memory buffer, a format of the image data, and a type of content. Information about the selected size of the pixel block may be obtained from a BlockMode field of the image data that is transmitted via a wireless channel.

In operation 320, it is determined whether a sufficient bandwidth is available so as to transmit the image data. If available, the method proceeds to operation 350, and if not available, the method proceeds to operation 330.

In operation 330, the wireless transmitter drops one or more pixels at every pixel block. In a pixel dropping procedure, a pixel having the greatest reference distance from an initial pixel included in the pixel block may be first dropped.

In operation 340, it is determined whether a data rate at which image data having one or more pixels dropped therefrom is transmitted is sufficiently low, compared to the available bandwidth. If sufficiently low, the method proceeds to operation 350, and if not sufficiently low, the method proceeds to operation 330. That is, if the data rate is not sufficiently low, the pixel dropping procedure may be progressively further performed. In this regard, the data rate may be further decreased by changing a pixel dropping mode by increasing the number of dropping-target pixels.

In operation 350, the image data having one or more pixels dropped therefrom is packetized and is transmitted to the wireless receiver via the wireless channel. In operation 350, information about the pixel dropping mode, information about the size of the pixel block, and information about the number of dropped pixels may be hierarchically classified, a result thereof may be indexed, and then indexing information may be transmitted with the packetized image data.

In the flowchart of FIG. 17, operations 320 through 340 may be performed in the application & PAL layer 13 (or an audio video control (AVC) layer) in the wireless transmitter 11. Specific operations such as packetization may also be related to the MAC layer 14M of the wireless transmitter 11.

FIG. 18 is a flowchart of a method of receiving image data and restoring pixels, performed by the wireless receiver 12, according to an embodiment of the present invention.

In operation 410, the wireless receiver 12 receives a data packet that is transmitted via a wireless channel. The received data packet may be depacketized.

In operation 420, it is checked whether pixels that are dropped by the wireless transmitter via a pixel dropping procedure exist. Here, the checking operation may be performed by obtaining the indexing information that is transmitted in operation 350 of the flowchart of FIG. 17. If the pixels exist, the method proceeds to operation 430. If the pixels do not exist, the method is ended.

In operation 430, the dropped pixels may be restored by obtaining the information about the size of the pixel block, the information about the number of dropped pixels, and information about reference pixels from the indexing information. The restoring process is performed in reverse order of the pixel dropping procedure. That is, the dropped pixel may be restored with reference to a pixel having the smallest reference distance from the dropped pixel, based on the number of dropped pixels and the size of the pixel block.

In the flowchart of FIG. 18, operation 430 may be performed in the application & PAL layer 16 (or an AVC layer) in the wireless receiver 12. The depacketization in operation 410 may be performed by a depacketizing module included in the MAC layer 15M of the wireless receiver 12.

According to the one or more embodiments of the present invention, when uncompressed image data is transmitted, a data rate may be adjusted based an environment and a bandwidth of a wireless channel.

According to the one or more embodiments of the present invention, when image data is transmitted via the wireless channel, the data rate may be progressively adjusted according to an available bandwidth.

The embodiments of the present invention can be written as computer programs and can be implemented in general-use digital computers that execute the programs using a computer readable recording medium. In addition, a data structure used in the embodiments of the present invention can be written in a computer readable recording medium through various means. Examples of the computer readable recording medium include magnetic storage media (e.g., ROM, floppy disks, hard disks, etc.), optical recording media (e.g., CD-ROMs, or DVDs), etc.

While this invention has been particularly shown and described with reference to exemplary embodiments thereof, it will be understood by those of ordinary skill in the art that various changes in form and details may be made therein without departing from the spirit and scope of the invention as defined by the appended claims. The exemplary embodiments should be considered in a descriptive sense only and not for purposes of limitation. Therefore, the scope of the invention is defined not by the detailed description of the invention but by the appended claims, and all differences within the scope will be construed as being included in the present invention.

## Claims

1. A method of transmitting image data via a wireless channel, the method comprising:
dropping one or more pixels from every pixel block consisting of the image data, so as to decrease a data rate of the image data; and
transmitting the image data from which the one or more pixels are dropped.

2. The method of claim 1, wherein the pixel block comprises one or more pixels that are spatially adjacent to each other, and
the dropping of the one or more pixels comprises dropping the one or more pixels based on information about a size of the pixel block which is obtained by using a BlockMode field of the image data.

3. The method of claim 1, wherein the dropping of the one or more pixels further comprises progressively dropping pixels so as to additionally decrease the data rate, based on a bandwidth of the wireless channel via which the image data is transmitted.

4. The method of claim 3, wherein the progressive dropping comprises progressively changing at least one of the size of the pixel block and the number of pixels to be dropped, and then dropping the pixels.

5. The method of claim 3, wherein the dropping of the pixels comprises first dropping a pixel having the greatest reference distance from an initial pixel comprised in the pixel block.

6. The method of claim 3, wherein the dropping of the pixels comprises dropping pixels selected at positions that are uniformly disposed in the pixel block.

7. The method of claim 1, wherein the transmitting comprises:
hierarchically classifying a plurality of pixel dropping modes according to positions and the number of pixels to be dropped; and
transmitting the image data along with indexing information indicating a pixel dropping mode that corresponds to the positions and the number of the one or more pixels and that is from among the plurality of pixel dropping modes.

8. A method of restoring image data via a wireless channel, the method comprising:
receiving the image data from which data values of one or more pixels are dropped; and
restoring the one or more dropped pixels by referring to the data values of the one or more pixels.

9. The method of claim 8, wherein the restoring of the one or more dropped pixels comprises performing the restoring by referring to a pixel having the smallest reference distance from a restoring-target pixel in a pixel block comprising the restoring-target pixel.

10. The method of claim 8, wherein the receiving of the image data comprises receiving the image data along with indexing information about positions and the number of dropped pixels.

11. The method of claim 10, wherein the restoring of the one or more dropped pixels comprises performing the restoring by referring to the indexing information.

12. A wireless transmitter for transmitting image data via a wireless channel, the wireless transmitter comprising:
a pixel drop module for dropping one or more pixels from every pixel block consisting of the image data, so as to decrease a data rate of the image data; and
a data transmitting module for transmitting the image data from which the one or more pixels are dropped.

13. The wireless transmitter of claim 12, wherein the pixel block comprises one or more pixels that are spatially adjacent to each other, and
the pixel drop module drops the one or more pixels based on information about a size of the pixel block which is obtained by using a BlockMode field of the image data.

14. The wireless transmitter of claim 12, wherein the pixel drop module progressively drops pixels so as to additionally decrease the data rate, based on a bandwidth of the wireless channel via which the image data is transmitted.

15. The wireless transmitter of claim 13, wherein the pixel drop module progressively changes at least one of the size of the pixel block and the number of pixels to be dropped, and then drops the pixels.

16. The wireless transmitter of claim 14, wherein the pixel drop module first drops a pixel having the greatest reference distance from an initial pixel comprised in the pixel block.

17. The wireless transmitter of claim 14, wherein the pixel drop module drops pixels selected at positions that are uniformly disposed in the pixel block.

18. The wireless transmitter of claim 12, wherein the data transmitting module hierarchically classifies a plurality of pixel dropping modes according to positions and the number of pixels to be dropped, and transmits the image data along with indexing information indicating a pixel dropping mode that corresponds to the positions and the number of the one or more pixels and that is from among the plurality of pixel dropping modes.

19. A wireless receiver for restoring image data via a wireless channel, the wireless receiver comprising:
a data receiving module for receiving the image data from which data values of one or more pixels are dropped; and
a pixel restoring module for restoring the one or more dropped pixels by referring to the data values of the one or more pixels.

20. The wireless receiver of claim 19, wherein the pixel restoring module restores the one or more dropped pixels by referring to a pixel having the smallest reference distance from a restoring-target pixel in a pixel block comprising the restoring-target pixel.

21. The wireless receiver of claim 19, wherein the data receiving module receives the image data along with indexing information about positions and the number of dropped pixels.

22. The wireless receiver of claim 21, wherein the pixel restoring module restores the one or more dropped pixels by referring to the indexing information.

23. A computer-readable recording medium having recorded thereon a program for executing the method of any one of claims 1-11.
